**Europäisches Patentamt**

(19) **European Patent Office**

**Office européen des brevets**

(11) Numéro de publication: **0 224 425**
**B1**

(12) **FASCICULE DE BREVET EUROPEEN**

(45) Date de publication du fascicule du brevet:
07.02.90

(21) Numéro de dépôt: **86450023.6**

(22) Date de dépôt: **21.11.86**

(51) Int. Cl.⁴: **D04B 1/08**

---

(54) **Nouvelle structure maillée à haute résistance notamment au perçage et au déchirement.**

---

(30) Priorité: **22.11.85 FR 8517423**
**05.12.85 FR 8518151**

(43) Date de publication de la demande:
**03.06.87 Bulletin 87/23**

(45) Mention de la délivrance du brevet:
**07.02.90 Bulletin 90/6**

(84) Etats contractants désignés:
**AT BE CH DE ES FR GB GR IT LI LU NL SE**

(56) Documents cités:
**DE-A- 2 713 539**
**FR-A- 1 464 865**
**FR-A- 2 027 983**
**US-A- 4 349 593**

(73) Titulaire: **SOCIETE CIVILE D'INVENTEURS SPML,**
**29 avenue du Général Leclerc, F-33110 Le Bouscat(FR)**

(72) Inventeur: **Melec, Didier 4 Les Landes de Basson,**
**Chemin de la Tuilerie St.-Aubin-du-Medoc,**
**F-33160 Saint-Medard-en-Jalles(FR)**
Inventeur: **Peres, Claudine, 29 avenue du Général**
**Leclerc, F-33110 Le Bouscat(FR)**
Inventeur: **You, Claudine, Cité des Castors, La Poueze**
**F-49370 Le Louroux-Beconnais(FR)**
Inventeur: **Lefere, Geneviève, 3 Allée de Frescaty,**
**F-57158 Montigny-les-Metz(FR)**

(74) Mandataire: **Thébault, Jean-Louis, Cabinet Thébault**
**S.A. 50 Cours de Verdun, F-33000 Bordeaux(FR)**

---

ACTORUM AG

## Description

La présente invention a trait à une nouvelle structure maillée apte à constituer divers revêtements ou parois, en particulier à haute résistance au perçage et au déchirement, à des fins de sécurité ou de protection des personnes ou des objets.

Le but de l'invention est de réaliser une structure de sécurité ou protection à la fois plus résistante et plus légère que les structures connues utilisées actuellement.

A cet effet, l'invention a pour objet une nouvelle structure maillée à haute résistance notamment au perçage et au déchirement, caractérisée en ce qu'elle est constituée d'un tricot dont la contexture est formée d'un ensemble de mailles jetées se composant d'un piqué, de deux revers cylindriques et d'une trame plateau, avec répétition toutes les huit chutes, les fils constitutifs du tricot étant formés de fibres de polyaramide.

Une telle structure peut être utilisée telle quelle par exemple comme filet ou étoffe de protection.

Suivant d'autres applications, ladite structure est revêtue par enduction d'une résine thermoplastique, telle que du chlorure de polyvinyle ou du polyuréthane par exemple, à des fins d'étanchéité, de manière à réaliser des vêtements de protection, tels que des tabliers de boucher par exemple, remarquablement résistants et efficaces tout en ayant un poids considérablement inférieurs aux vêtements de protection usuels du type cotte de mailles.

Suivant encore d'autres applications, ladite structure est imprégnée d'une résine de divers types pour obtenir une structure plus ou moins rigide tout particulièrement résistante au perçage et au déchirement.

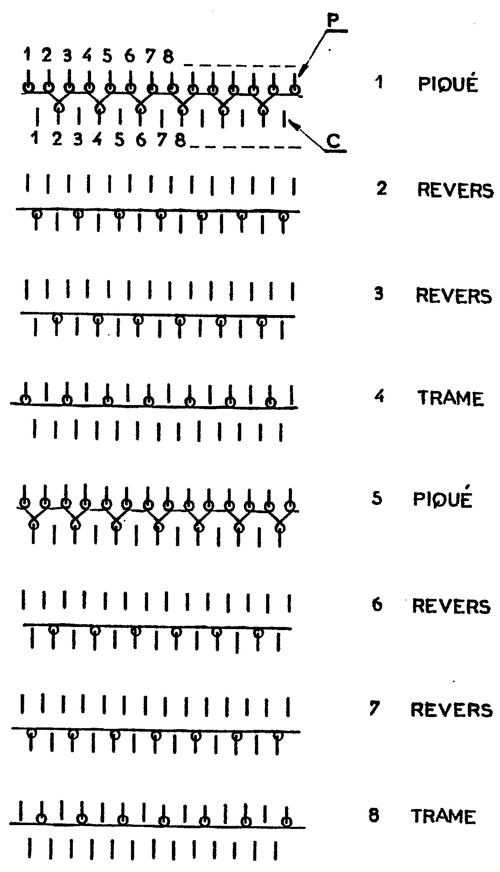

D'autres caractéristiques et avantages ressortiront de la description qui va suivre donnée à titre d'exemple uniquement et en regard du dessin annexé sur lequel la figure unique illustre la technique de tricotage de la structure selon l'invention.

Sur cette figure, on a symbolisé en P et C, respectivement, les rangées d'aiguilles de deux fontures, de plateau et de cylindre, d'un métier à tricoter circulaire, huit chutes numérotées 1 à 8 étant illustrées sur la figure.

La contexture de ce tricot est formée d'un ensemble de mailles jetées se composant d'un piqué, de deux revers cylindre et d'une trame plateau, avec répétition toutes les huit chutes.

La contexture de ce tricot, qui est indémaillable, permet l'utilisation de fibres de polyaramide, plus connues sous la dénomination commerciale "KEVLAR", par exemple des fibres de numéro métrique 1/56.

Outre la possibilité d'utiliser telle quelle une telle structure qui se révèle d'une très remarquable résistance au perçage et au déchirement notamment, on peut la revêtir par enduction d'une résine thermoplastique telle que du chlorure de polyvinyle ou du polyuréthane.

Cette matière forme un film continu recouvrant l'une des faces du tricot, ou bien les deux.

L'épaisseur de la matière plastique est de l'ordre de quelques dixièmes de millimètre à quelques millimètres.

La mise en place de cette matière plastique peut se faire par exemple par dépôt et étalage à la râcle ou par calandrage entre un cylindre chaud et un cylindre froid, une seule face du tricot étant alors enduite.

Un tel revêtement plastique a un rôle principalement d'étanchéité.

Une telle structure ainsi enduite permet la confection de vêtements de sécurité et protection professionnels tels que des tabliers de boucher ou analogue, remarquables par leur résistance, notamment au perçage et au déchirement, nettement plus efficace à ce point de vue que les traditionnels vêtements protecteurs en cotte de mailles et, de plus, considérablement plus légers.

C'est ainsi qu'un tablier de boucher réalisé avec une structure maillée conforme à l'invention présente un poids d'environ 900 grammes au mètre carré, alors que des tabliers du type cotte de mailles ont couramment des poids de 13 à 14 Kg/m².

Une telle structure enduite peut aussi être utilisée pour la confection de capacités souples fermées, sous pression ou dépression, pratiquement increvables et indéchirables. Dans ces applications, un film thermoplastique étanche peut être avantageusement interposé entre la structure maillée et la couche d'enduction, qui est en PVC ou polyuréthane de préférence.

Dans d'autres applications, la structure maillée ci-dessus, au lieu d'être enduite, est imprégnée, par tout procédé connu approprié, d'une résine.

Des résines de divers types peuvent être utilisées selon les propriétés que l'on désire conférer à la structure finale. Comme résines utilisables on peut citer les résines thermodurcissables, notamment phénoplastes, aminoplastes, éthoxylines (époxydes), polyesters insaturées, polyuréthanes, réticulées, alkydes, les résines thermoplastiques, notamment polyvinyliques, polyoléfines, cellulosiques, polyamides, les polymères spéciaux tels que polyesters saturés, polyuréthanes linéaires, polycarbonates, ou les élastomères tels que le silicone, les caoutchoucs naturels et synthétiques et leurs dérivés.

La résine peut être éventuellement chargée de poudres renforçantes pulvérulentes ou micronisées.

La structure ainsi imprégnée est plus ou moins rigide selon la nature de la matrice et est utilisable pour la réalisation par exemple de masques d'escrime, de vêtements de sport, de parois de canoë, d'ailes d'ULM, etc...

## Revendications

1. Structure maillée à haute résistance notamment au perçage et au déchirement, caractérisée en ce qu'elle est constituée d'un tricot dont la contexture est formée d'un ensemble de mailles jetées se composant d'un piqué, de deux revers cylindriques et d'une trame plateau, avec répétition toutes les huit chutes, les fils constitutifs du tricot étant formés de fibres de polyaramide.

2. Structure maillée suivant la revendication 1, caractérisée en ce qu'elle est revêtue par enduction d'une couche de résine thermoplastique, de préférence de chlorure de polyvinyle ou de polyuréthane, appliquée sur l'une et/ou l'autre des faces du tricot.

3. Structure maillée suivant la revendication 1 ou 2, caractérisée en ce qu'un film de thermoplastique est interposé entre le tricot et la ou les couches d'enduction.

4. Structure maillée suivant la revendication 1, caractérisée en ce qu'elle est imprégnée d'une résine, éventuellement chargée de poudres renforçantes pulvérulentes ou micronisées.

5. Objets tels que parois, vêtements, revêtements, souples, semi-rigides ou rigides, constitués à l'aide de la structure suivant l'une quelconque des revendications 1 à 4.

## Claims

1. Meshed structure which is particularly resistant to tearing or piercing, characterized in that it comprises a knitted fabric, the set of which is composed of a combination of cast loops formed from one pique, two cylindrical backs and a weft plate which is repeated after every eight drops, the threads used in the knitting being formed from polyaramide fibres.

2. Meshed structure as claimed in claim 1, characterized in that it is covered with a coating of thermoplastic resin, preferably polyvinyl chloride or polyurethane, applied on one or both of the surfaces of the knitted fabric.

3. Meshed structure as claimed in either of claims 1 or 2, characterized in that a film of thermoplastic is placed between the knitted fabric and the coating layer(s).

4. Meshed structure as claimed in claim 1, characterized in that it is impregnated with a resin, which may be filled with pulverized or ground reinforcing powders.

5. Objects such as partitions, clothes, flexible, semi-rigid or rigid coverings, produced with the structure according to any of the claims 1 to 4.

## Patentansprüche

1. Maschenware mit hohem Widerstand insbesondere gegen Durchlöchern und Zerreißen, dadurch gekennzeichnet, daß sie aus einer Strickware gebildet wird, deren Strickbild aus einer Gesamtheit von abgeschlagenen Maschen gebildet wird, die sich aus einem Piqué, zwei zylindernadelseitigen Maschenbildungen und einer rippscheibennadelseitigen Maschenbildung mit einer Wiederholung alle acht Abschläge zusammensetzt, wobei die die Strickware bildenden Fäden aus Polyaramidfasern gebildet sind.

2. Maschenware nach Anspruch 1, dadurch gekennzeichnet, daß sie mit einem dünnen Überzug aus einer Schicht aus thermoplastischem Harz, insbesondere Polyvinylchlorid oder Polyurethan, versehen ist, die auf die eine und/oder die andere Seite der Strickware aufgebracht ist.

3. Maschenware nach Anspruch 1 oder 2, dadurch gekennzeichnet, daß ein thermoplastischer Film zwischen der Strickware und der oder den Überzugsschichten angeordnet ist.

4. Maschenware nach Anspruch 1, dadurch gekennzeichnet, daß sie mit einem Harz, das gegebenenfalls mit verstärkenden, feinpulverigen oder mikronisierten Pulvern gefüllt ist, imprägniert ist.

5. Objekte wie weiche, halbfeste oder feste Wände, Kleidung, Verkleidungen, hergestellt mit Hilfe der Ware nach einem der Ansprüche 1 bis 4.

1  PIQUÉ

2  REVERS

3  REVERS

4  TRAME

5  PIQUÉ

6  REVERS

7  REVERS

8  TRAME